# EUROPEAN PATENT APPLICATION

(11) **EP 0 718 081 A2**
(43) Date of publication of application: **26.06.1996**
(21) Application number: 95309312.7
(22) Date of filing: 20.12.1995
(51) Int. Cl.: B29B 9/08, B29B 9/14, B29B 13/10, B29B 17/00

(54) **Improvements in or relating to apparatus for forming pellets**

(30) Priority: 20.12.1994 GB 9425746
(71) Applicant: POPE (UK) Limited, Ashby-de-la-Zouch, Leics. LE65 2TU (GB)
(72) Inventor: Pope, Matthew, Ashby-de-la-Zouch, Leics LE65 2TU (GB); Pope, Robert, Ashby-de-la-Zouch, Leics LE65 2TU (GB)
(74) Representative: Lock, Howard John

(57) **Abstract**

Apparatus (10) for forming pellets. The apparatus (10) comprises shredding means (12) for shredding a material to be formed into pellets, and pressing means (20) for pressing the shredded material into pellets. The apparatus (10) further includes distribution means for distributing or storing the pellets. The invention also provides a process for forming pellets. The process includes feeding an absorbent material to the shredding means (12) to shred the material, passing the shredded material to pressing means (20) to form the pellets and passing the pellet to distribution means (32) for distributing and storing the pellets.

## Description

This invention relates to apparatus for forming pellets. More particularly, but more exclusively, this invention relates to apparatus for forming pellets from waste absorbent material.

It is necessary for cat litter to be capable of absorbing the waste products from cats. Examples of cat litter are fuller's earth and wood shavings. A disadvantage of such materials is that either their absorbency is not particularly high, or they are expensive.

A further field where absorbency is required is, for example, in the case of oil spills. Current techniques involve the spraying of detergents and other materials on the spill to absorb it. Some of absorbent materials can be used, for example clay based granules or sawdust based pellets. These have problems of disposal associated with them.

It is an object of this invention to obviate and/or mitigate the above disadvantages.

According to one aspect of this invention, there is provided a process for the production of pellets of an absorbent material, the process comprising feeding an absorbent material to shredding means to shred the material, passing said shredded material to pressing means to form said pellets, and passing said pellets to distribution means for distribution or storage.

Preferably, the material is a high absorbency polymer material, for example, polypropylene. The polypropylene may be mixed with cellulose for example in the form of a paper product for example a paper pulp or wood. The material may be in the form of waste material from the production of nappies, sanitary towels or handwipes. In some cases the material may contain polyethylene.

The material may be treated with an absorbent enhancing additive, known in the art as "super absorber" for example sodium polyacrylate, and persons skilled in the art will be aware of other compound which can be used as super absorbers. Super absorbers possess the property of being able to absorb more than their own weight of water.

Preferably, the process includes the step of passing the pellets through a cooler to reduce the temperature of the pellets formed in the pressing means to ambient.

The process may further include sieving means to sieve dust from the pellets. The sieving means may be arranged downstream of the cooling means.

The distribution means may comprise packaging means and may include storage means. The process may include the step of packaging the pellets at the packaging means. The process may also include the step of storing, in the storage means, pellets not packaged at the packaging means. Pellets in the storage means may be passed to the packaging means for packaging if desired.

The packaging means may comprise a bagging station capable of filling bags with pellets. Preferably, the bags will be capable of holding five, ten or twenty kilograms of pellets.

Dosing means may be provided upstream of the pressing means to ensure that the shredded material fed to the pressing means is of uniform consistency. The dosing means may comprise a roller member capable of compressing the material. The material may be transported on a conveyor passed said roller member and the roller member may rotate such that the portion thereof in contact with said material is moving in the opposite direction to said material on the conveyor. Additive adding means may be provided to pass additive to said material prior to entry to the pressing means. The additive adding means may be in the form of an additive bin.

Additive inlets may be provided on the pelleting press to allow liquid additives to be added to the material during pressing.

The process may further include the steps of transporting the material between the processing steps.

The shredding means may comprise cutting means comprising a plurality of blades capable of cutting the material into pieces capable of being compressed into pellets. A shredder may be provided upstream of the cutting apparatus to shred the material into pieces capable of being handled by the cutting means.

According to another aspect of this invention, there is provided apparatus for the production of pellets of an absorbent material, comprising shredding means to shred the material, pressing means to press the shredded material to form pellets, and a distribution means for distribution of the pellets.

Preferably, the material is a high absorbency polymer material, for example, polypropylene. The polypropylene may be mixed with a paper product for example a paper pulp. The material may be in the form of waste material from the production of nappies, sanitary towels or handwipes. In some cases the material may contain polyethylene.

Preferably, the apparatus further includes a cooler for reducing the temperature of pellets to ambient.

The apparatus may further include sieving means to sieve dust from the pellets, which may be arranged downstream of the cooler.

The distribution means may comprise a packaging means for packaging the pellets. The packaging means may comprise a bagging station to fill bags with pellets, for example weighing five, ten or twenty kilograms.

The distribution means may also include storage means to store pellets not passed to the packaging apparatus. The storage means may comprise a storage bin which may be in the form of a tower.

The apparatus may further include dosing means to ensure that the shredded material fed to the pressing means is of uniform consistency. The dosing means may comprise a roller member capable of compressing the material. The material may be transported on a conveyor passed said roller member and said roller member may rotate such that the portion in contact with said material is moving in the opposite directions to said material on the conveyor.

The apparatus may also comprise additive adding means to pass additive to said material prior to entry to the pressing means. The additive adding means may be in the form of an additive bin.

The pressing means may comprise at least one inlet capable of introducing a liquid additive to the pellets being formed.

The apparatus may further include transport means to transport the material to the various pieces of equipment.

The apparatus may also include a dust filter capable of sucking dust from the atmosphere around the apparatus to create a substantially dust free environment, thereby preventing explosions. Dust so filtered by the dust filter may be passed to the shredding means for addition to the material being shredded.

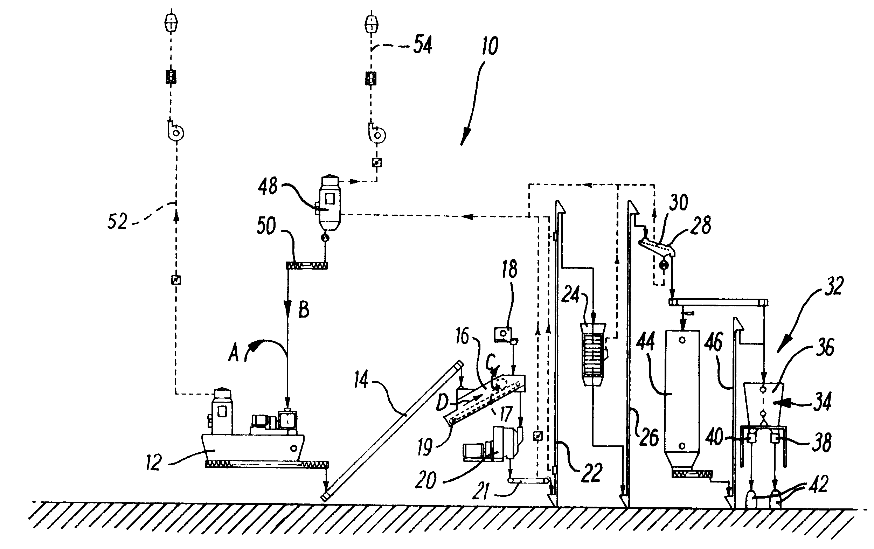

An embodiment of the invention will now be described by way of example only with reference to the accompanying drawing which is a schematic view of apparatus for forming pellets.

Referring to the drawing, there is shown apparatus, in the form of a process plant 10 for the production of pellets of an absorbent material for example a high absorbency polymer material in the form of polypropylene, which may be mixed with other ingredients, for example cellulose and polyethylene. The cellulose may be derived from paper products and may be in the form of compressed paper, for example waste absorbent material from the production of nappies and sanitary towels. Alternatively, the cellulose may be derived from wood. The absorbent material may be pretreated with a super absorber, for example sodium polyacrylate. The shredding means also includes a shredder (not shown) upstream of the hammer mill 12. The shredder is suitable for shredding waste material as it arrives at the plant 10 into a size capable of being handled efficiently by the hammer mill 12.

The process plant 10 comprises shredding means including cutting means in the form of a hammer mill 12. The hammer mill 12 is provided with a plurality of blades capable of cutting material fed thereto into small pieces. An example of a suitable hammer mill is one manufactured by Jesma-Matador A/S under the product No. 8007. The material is fed to the hammer mill 12 via the line A.

The material is shredded by the shredder and the hammer mill 12 and then passed by a belt conveyor 14 to dosing means 16. The dosing means 16 comprises a wheel 17 rotating in the direction of the arrow indicated C. The wheel 17 crushes material on a conveyor 19 which is being transported in the direction indicated by the arrow D. The wheel 17 thus ensures that all material being transported through the dosing means 16 is of uniform consistency. Additive adding means in the form of an additive bin 18 can be used to feed additives to the material. The additive in the bin 18 is in the form of a powder. The additive can be for example a colouring, or other additive which may alter the properties of the pellet formed by the process, for example to give it more absorbency. The material from the dosing means 16 is then passed to pressing means in the form of a pellet press 20. Further additives, in the form of liquids, for example scents and detergents, can be added through inlets (not shown) in the pellet press 20. An example of a suitable pellet press is one manufactured by Jesma-Matador A/S under the product No. M30.

The pellets produced by the pellet press 20 are at an elevated temperature, caused by the compression of the material in the press 20. The pellets are then transferred from the pellet press 20 to a bucket elevator 22 via a belt conveyor 21. Suitable such elevators and conveyors are manufactured by Jesma-Matador A/S. The bucket elevator 22 then passes the pellets to cooling means in the form of a vertical cooling tower 24. Pellets passing out of the cooling tower 24 are transferred via the bucket elevator 26 to sieving means 28 comprising a fine sieve 30 to remove dust from the pellets. Suitable such cooling towers and sieves are manufactured by Jesma-Matador A/S.

The pellets are then passed to distribution means 32 which comprises a bagging station 34 comprising a hopper 36 and two outlets 38,40 capable of filling bags 42.

In cases where, for example, excess pellets are produced that can be handled by the bagging means 34, excess pellets are stored in a storage tower 44. The pellets so stored can when required, be passed via a bucket elevator 46 to the bagging means 34. Any suitable bagging means and storage tower as would readily be appreciated by those skilled in the art can be used.

A dust filter 48 is provided to filter dust from the apparatus. The filter 48 is capable of sucking dust from around the apparatus. The dust filtered from the apparatus can be fed to the hammer mill 12 via a screw conveyor 50 and line B. A suitable such dust filter is manufactured by Jesma-Matador A/S under product No. DFF 48/2400.

Air from the filter 48 and the hammer mill 12 is passed to atmosphere outside the plant via lines 52 and 54.

The use of waste material from nappie and sanitary production is advantageous because it obviates the need for land fills of such material.

Various modifications can be made without departing from the scope of the invention. For example, some of equipment different specific to that described above and manufactured by different companies can be used if such equipment is suitable.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A process for the production of pellets of an absorbent material, the process characterised by feeding an absorbent material to shredding means to shred the material, passing said shredded material to pressing means to form said pellets, and passing said pellets to distribution means for distribution or storage.

2. A process according to Claim 1 characterised in that the process includes the step of passing the pellets through a cooler to reduce the temperature of the pellets formed in the pressing means to ambient.

3. A process according to Claim 1 or 2 characterised in that the process further includes the step of sieving the pellets at a sieving means to sieve dust therefrom.

4. A process according to Claim 3 when dependent on Claim 2 characterised in that the sieving step is carried out after the cooling step.

5. A process according to any preceding claim characterised by the step of packaging the pellets at a packaging means.

6. A process according to Claim 5 characterised by the step of storing, in a storage means, pellets not packaged at the packaging means.

7. A process according to any preceding claim characterised by dosing the material in dosing means before pressing the material to ensure that the shredded material fed to the pressing means is of uniform consistency.

8. A process according to Claim 7 characterised in that the material is transported on a conveyor via a roller member at the dosing means whereby the roller member rotates such that the portion thereof in contact with the material is moving in the opposite direction to the material on the conveyor.

9. A process according to any preceding claim characterised in that additives may be passed to the material by additive adding means before pressing the material.

10. A process according to Claim 9 characterised in that the additive adding means comprises an additive bin.

11. A process according to any preceding claim characterised in that additive inlets are provided on the pressing means to allow liquid additives to be added to the material during pressing.

12. A process according to any preceding claim characterised by the steps of transporting the material between the processing steps.

13. A process according to any preceding claim characterised in that the shredding means comprises cutting means comprising a plurality of blades to cut the material into pieces capable of being compressed into pellets.

14. A process according to Claim 13 characterised in that a shredder may be provided upstream of the cutting means to shred the material into pieces capable of being handled by the cutting means.

15. A process according to any preceding claim characterised in that the absorbent material comprises a high absorbency polymer material.

16. A process according to Claim 15 characterised in that the high absorbency polymer material comprises polypropylene.

17. A process according to Claim 15 or 16 characterised in that the absorbent material comprises a mixture of polypropylene, and one or more ingredients selected from the group comprising cellulose and polyethylene.

18. A process according to Claim 17 characterised in that the cellulose is derived from a paper product and/or from wood.

19. A process according to Claim 18 characterised in that the paper product comprises waste material from the production of nappies, and/or sanitary towels, and/or handwipes.

20. A process according to any of Claims 15 to 19 characterised in that the absorbent material is treated or pre-treated with a super absorber.

21. Apparatus for the production of pellets of an absorbent material, characterised by shredding means to shred the material, pressing means to press the shredded material to form pellets, and a distribution means for distribution or storage of the pellets.

22. Apparatus according to Claim 21 characterised by a cooler for reducing the temperature of pellets to ambient.

23. Apparatus according to Claims 21 or 22 characterised by sieving means to sieve dust from the pellets, the sieving means being arranged downstream of the cooler.

24. Apparatus according to any of Claims 21 to 23 characterised in that the distribution means comprises a packaging means for packaging the pellets.

25. Apparatus according to any of Claims 21 to 24 characterised in that the distribution means also includes storage means to store pellets not passed to the packaging apparatus.

26. Apparatus according to Claim 25 characterised in that the storage means comprises a storage bin.

27. Apparatus according to Claim 26 characterised in that the storage bin is in the form of a tower.

28. Apparatus according to any of Claims 21 to 27 characterised by dosing means to ensure that the shredded material fed to the pressing means is of uniform consistency.

29. Apparatus according to Claim 28 characterised in that the dosing means comprises a roller member capable of compressing the material, the material being transported on a conveyor via said roller member and said roller member rotating such that the portion in contact with said material is moving in the opposite directions to said material on the conveyor.

30. Apparatus according to any of Claims 21 to 28 characterised by additive adding means to pass additive to said material prior to entry to the pressing means.

31. Apparatus according to Claim 30 characterised in that the additive adding means comprises an additive bin.

32. Apparatus according to any of Claims 21 to 31 characterised in that the pressing means comprises at least one inlet capable of introducing a liquid additive to the pellets being formed.

33. Apparatus according to any of Claims 21 to 32 characterised by transport means to transport the material to the various pieces of equipment.

34. Apparatus according to any of Claims 21 to 35 characterised by a dust filter capable of sucking dust from the atmosphere around the apparatus to create a substantially dust free environment, thereby preventing explosions.

35. Apparatus according to Claim 34 characterised in that dust filtered by the dust filter is passed to the shredding means for addition to the material being shredded.

36. A pellet formed from an absorbent material.

37. A pellet according to Claim 36 characterised in that the absorbent material is a high absorbency polymer material.

38. A pellet according to Claim 37 characterised in that the high absorbency polymer material comprises polypropylene.

39. A pellet according to Claim 37 or 38 characterised in that the absorbent material comprises a mixture of polypropylene and one or more ingredients selected from the group comprising cellulose and polyethylene.

40. A pellet according to Claim 39 characterised in that the cellulose is derived from a paper product and/or from wood.

41. A pellet according to Claim 40 characterised in that the paper product comprises waste material from the production of nappies, and/or sanitary towels and/or handwipies.

42. A pellet according to any of Claims 36 to 41 characterised in that the absorbent material is treated or pre-treated with a super absorber.
